# EUROPÄISCHE PATENTSCHRIFT

(11) **EP 2 731 858 B1**
(45) Veröffentlichungstag und Bekanntmachung des Hinweises auf die Patenterteilung: **04.01.2017**
(21) Anmeldenummer: 12743919.8
(22) Anmeldetag: 13.07.2012
(51) Int. Cl.: B62M 6/55, B62M 6/45, B62M 6/90

(54) **FAHRRADRAHMEN, BATTERIEPACK UND FAHRRAD**
BICYCLE FRAME, BATTERY PACK, AND BICYCLE
CADRE DE BICYCLETTE, BLOC-BATTERIE, ET BICYCLETTE CORRESPONDANTE

(30) Priorität: 13.07.2011 DE 102011079094
(43) Veröffentlichungstag der Anmeldung: 21.05.2014
(73) Patentinhaber: FAZUA GmbH, 80797 München (DE)
(72) Erfinder: BIECHELE, Johannes, 80805 München (DE)
(74) Vertreter: Vossius & Partner Patentanwälte Rechtsanwälte mbB
(86) Internationale Anmeldenummer: PCT/EP2012/063838
(87) Internationale Veröffentlichungsnummer: WO 2013/007828

(56) Entgegenhaltungen:
- EP-A1- 2 230 164
- EP-A2- 0 168 905
- EP-A2- 0 650 887
- EP-A2- 2 423 096
- WO-A1-2008/106976
- WO-A2-03/022671
- CH-A5- 593 822
- DE-A1- 3 018 333
- DE-A1-102008 047 087
- DE-U1- 20 012 972
- DE-U1-202004 014 189
- DE-U1-202010 010 522
- JP-A- 4 358 986
- JP-A- 6 227 474
- JP-A- H08 164 886
- JP-A- 2000 238 675
- JP-A- 2009 248 668
- US-A- 5 845 727
- US-A1- 2005 039 963
- US-A1- 2006 208 450

## Beschreibung

Die Erfindung betrifft ein Fahrrad. Ein Fahrradrahmen zum Aufbau eines Elektrofahrrads und ein Elektrofahrrad mit einem solchen Rahmen werden beschrieben. Des Weiteren werden ein Batteriepack für ein solches Elektrofahrrad und eine Heimtraineranordnung beschrieben. Weiter werden ein Fahrrads, ein Hilfsmotor für ein Fahrrad, eine Regeleinheit für einen solchen Hilfsmotor und ein Antriebsadapter beschrieben.

Fahrräder erfreuen sich seit langem als kostengünstige, leicht zu handhabende und emissionsfreie Fortbewegungsmittel großer Beliebtheit. In den letzten Jahrzehnten haben sie auch als Sport- bzw. Fitnessgeräte massenhafte Verbreitung gefunden, und es haben sich für unterschiedliche sportliche Einsatzfelder besonders geeignete Typen herausgebildet. Hierzu gehören neben Rennrädern und für den Freizeitsporteinsatz auf Asphalt oder in leichtem Geländer optimierten Fahrrädern (Roadbikes, Citybikes oder Crossbikes) vor allem die für den Einsatz im Gelände und speziell bergigem Geländer entwickelten Mountainbikes (MTB), in verschiedenen konstruktiven Ausprägungen.

Andererseits wird seit einigen Jahren die im Grunde schon alte Idee des Elektrofahrrads wieder in attraktive Produkte ("Pedelecs") umgesetzt, die trotz des für ein Fahrrad hohen Gewichts und Preises inzwischen beachtenswerte Verbreitung gefunden haben. Potenzielle Kunden sind insbesondere ältere, weniger konditionsstarke oder von sportlichen Ambitionen freie Radfahrer. Es gibt aber auch unter sportlich orientierten Radfahrern Interessenten für Elektroräder, sei es zur Nutzung auf dem Arbeitsweg oder wegen der Möglichkeit, mit ihnen ohne Überbeanspruchung der eigenen Physis den Aktionsradius zu erweitern und/oder die Reisegeschwindigkeit zu erhöhen.

Speziell bei den Fahrern von Mountainbikes gibt es derzeit äußerst unterschiedliche Haltungen zu Pedelecs und noch kaum einen Markt für diese, u. a. wegen der schwergewichtigen und sportlichen Ambitionen kaum gerecht werdenden Konstruktion und der schlechteren Handlichkeit und geringeren Agilität. Auch unter optischen Aspekten können derzeitige Pedelec-Konstruktionen den Ansprüchen eines sportlich ambitionierten Mountainbike-Fahrers nicht gerecht werden.

Die JP 2000 238675 A offenbart ein Fahrrad, das von einem Motor angetrieben wird. Das Fahrrad verfügt über einen Batterie und eine Krafteinheit mit einem elektrischen Motor. Die Batterie und ein Teil des Motors sind in ein Unterrohr eingebaut.

Die DE 20 2004 014 189 U1 offenbart ein Fahrrad mit einem Hilfsantrieb. Derartige Hilfsantriebe werden üblicherweise in einem Sattelrohr eines Fahrrads angebracht. Sie weisen einen bürstenlosen Gleichstrommotor und ein Getriebe auf. Zusätzlich sind derartige Hilfsmotoren mit Akkus und Steuerelektronik verbunden. Die Akkus versorgen derartige Hilfsmotoren mit Energie. Die Akkus sind in derartigen Systemen typischer Weise außen am Fahrrad bspw. in so genannten Satteltaschen angeordnet und über Kabel mit dem Hilfsmotor verbunden.

Diese Anordnung führt aber zu einer Reihe von ungewünschten Effekten bzw. Nachteilen.

Die Kabelverbindung stellt einen ersten Schwachpunkt derartiger Systeme dar. Dies ist gerade für Mountainbikes relevant, die oft in unwegsamem Gelände benutzt werden und daher großen Schlägen oder äußeren Einflüssen ausgesetzt sein können. Beispielsweise kann sich eine Satteltasche, in der die Akkus und die Steuerelektronik angebracht sind, bei Schlägen auf das Fahrrad vom Sattel lösen, was zum Unterbrechen der Verbindung zwischen Akku, Steuerelektronik und Hilfsantrieb führen kann. Weiter können diese Komponenten aus einem ähnlichen Grund verloren gehen. Ebenso ist es möglich, dass Satteltaschen, die mit Akkus befüllt sind, beim möglichen Herunterfallen Verletzungen oder Schäden am Fahrrad auslösen oder sie kann selbst durch bspw. Steinschlag beschädigt werden.

Weiter ist das Anbringen weiterer Strukturen, beispielsweise Satteltaschen für die Aufnahme der Akkus, aus verschiedenen anderen Gründen unerwünscht. So kann sich dies beispielsweise nachteilig auf die Aerodynamik und die ästhetische Erscheinung des Fahrrads auswirken. Zum Beispiel kann es für - insbesondere sportliche - Benutzer solche Systeme ungewünscht sein, dass andere an Hand solcher Satteltaschen direkt darauf aufmerksam werden, dass ein Fahrrad mit Hilfsantrieb genutzt wird.

Weiter ist auch zu beachten, dass die Montage derartiger Antriebssysteme oftmals kompliziert ist. So muss zuerst ein Innenlagerrohr eines Standardlagers gegen eine spezielle Antriebswelle ausgetauscht werden, weiterhin muss der Antrieb im Sattelrohr angebracht werden, das nur nach Demontage des Sattels nebst Sattelstange zugänglich ist, es muss eine Satteltasche zur Aufnahme der Akkus montiert werden und diese Akkus müssen leitend mit dem Antrieb verbunden werden. Eine solche Montage ist zeit- und kostspielig und kann vielfach nur von speziell dafür geschultem Personal durchgeführt werden.

Es ist daher eine Aufgabe der Erfindung, die Probleme und Nachteile des Standes der Technik zu überwinden. Insbesondere ist es eine bevorzugte Aufgabe der Erfindung, einen Hilfsmotor für ein Fahrrad bereit zu stellen, der einfach und sicher zu montieren und handhaben ist. Es ist weiter eine bevorzugte Aufgabe der Erfindung, ein neuartiges Fahrradkonzept bereitzustellen, welches den Gedanken der elektrisch unterstützten Mobilität mit den Ansprüchen sportlich und Lifestyle-orientierter Radfahrer besser in Übereinstimmung bringt als dies mit bisherigen Elektrofahrrad-Konstruktionen gelingt. Eine weitere bevorzugte Aufgabe der Erfindung ist es, einen einfach zu handhabenden, langlebigen, kompakten Hilfsmotor mit möglichst wenigen Teilen bzw. ein entsprechendes Fahrrad bereitzustellen.

Diese Aufgabe(n) wird/werden durch die Gegenstände der unabhängigen Ansprüche gelöst. Bevorzugte Ausführungsformen finden sich in den abhängigen Ansprüchen und in der Beschreibung.

Die Erfindung ist durch die Ansprüche definiert.

Die Erfindung geht von dem Gedanken aus, einen für ein Fahrrad herkömmlichen Typs, das insbesondere für den Freizeitsport einsetzbar ist, geeigneten Rahmen modular erweiterbar zum Aufbau eines Elektrofahrrads auszugestalten. Soweit nicht explizit anders angegeben bzw. soweit es sich dem Fachmann nicht funktional ergibt, werden die Begriffe Fahrrad und Fahrradrahmen im Folgenden synonym verwendet. In anderen Worten ist ein Fahrradrahmen notwendiges Merkmal eines Fahrrads. Gleichzeitig kann der Begriff Fahrrad aber auch optional andere Elemente zusätzlich zum Rahmen umfassen - beispielsweise einen Lenker, Laufräder und weitere Elemente. Dem Fachmann wird an Hand des konkreten Kontextes klar sein, ob es sich bei dem Beschriebenen um ein Fahrrad im engeren Sinne (also mit zusätzlichen Komponenten) oder ein Fahrrad im Weiteren Sinne (also um einen Fahrradrahmen) handelt. Wenn zum Beispiel davon die Rede ist, dass ein Hilfsmotor an einem Unterrohr eines Fahrrads angebracht ist, so schließt dies sicherlich die Anbringung an ein Unterrohr eines Fahrradrahmens mit ein, sodass in diesem Fall die Begriffe Fahrrad und Fahrradrahmen synonym zu verstehen sind. Wenn freilich ferner davon die Rede ist, dass zusätzliche Element an einem Lenker oder an einem Laufrad eines Fahrrads angebracht sind, so ist klar, dass in diesem Zusammenhang der Begriff Fahrrad zusätzlich zum Fahrradrahmen weitere Gegenstände mit einschließt.

Es wird beschrieben, dass mindestens ein Rahmenabschnitt zur abnehmbaren Halterung zumindest eines Energiespeichers, insbesondere eines vorkonfigurierten Batteriepacks, ausgebildet ist und Befestigungsmittel bzw. Öffnungen zum Einsetzen solcher zur gebrauchssicheren Fixierung dieses Energiespeichers aufweist. Gemäß einem Aspekt ist der Rahmenabschnitt außerdem zur Aufnahme weiterer Teile des Elektroantriebs, insbesondere einer Motor-Getriebe-Einheit und optional auch der zugehörigen Streuerelektronik, ausgebildet.

Gemäß einem weiteren, relativ unabhängigen Aspekt ist ein Tretlagergehäuse vorgesehen, welches zur alternativen Aufnahme eines herkömmlichen Tretlagers oder eines (typischerweise großvolumigeren) Tretlagermotors ausgebildet ist. Unter "Tretlagermotor" sollen hier insbesondere auch zusammenhängende Motor-Getriebe-Kombinationen verstanden werden, die - in der Regel über einen normalen Kettenbetrieb - das Hinterrad antreiben, wobei dem Hinterrad zusätzlich eine konventionelle Kettenschaltung zugeordnet sein kann.

Die Erfindung kann universell in allen Typen von Mountainbikes (insbesondere sowohl bei nur von gefederten - sogenannten Hardtails - als auch bei voll gefederten - sogenannten Fullys), aber auch - mit entsprechend anderer Rahmenkonstruktion im Detail - bei anderen Fahrrädern Anwendung finden. Sie ermöglicht den Aufbau von Rädern, die weitgehend die Vorzüge und Fahreigenschaften eines klassischen Fahrrads und eines Elektrofahrrads in sich vereinen. Ein solches Fahrrad kann die Lücke zwischen herkömmlichen, rein muskelbetriebenen Fahrrädern und Elektrofahrrädem durch eine neuartige Komponentensynthese von Fahrrad und Elektroantrieb schließen, indem beide Systeme modular zusammengefasst werden.

Das erfindungsgemäße Fahrrad ist in seiner Rahmenkonstruktion so ausgelegt, dass es vom Anwender mit wenigen Handgriffen von einem Fahrrad (speziell MTB) zu einem Pedelec umgerüstet werden kann. So werden mit einem einzigen Fahrradtyp mehrere Käufergruppen angesprochen, und es werden Interessenverschiebungen hin zum (unterstützendem) Elektroantrieb beim Fahrrad stimuliert. Da sich das erfindungsgemäße Fahrrad äußerlich kaum von sonstigen modern und sportlich gestalteten Rädern abhebt, wird die Konstruktion dem sportlichen und Lifestyle-Anspruch breiter Nutzergruppen gerecht. Die mögliche unauffällige Integration des Elektroantriebs sorgt zudem für vielfach gewünschtes "Understatement" hinsichtlich des Antriebskonzepts.

Da der Rahmen bzw. das Fahrrad in der Grundausstattung ohne Elektroantrieb verkauft werden können, ist ein Grundpreis in der Nähe des Preises eins herkömmlichen Rahmens bzw. Rades realisierbar, der dem Nutzer einen Einstieg in das modulare Konzept erleichtert. Mit der nachträglichen Anschaffung eines nachrüstbaren Motors bzw. einer Motor-Getriebe-Baugruppe und Batteriepacks (Akkus) steigt der Nutzer dann in die Welt der elektrisch unterstützten Mobilität ein, ohne dass ihm die Rückkehr zum reinen Muskelbetrieb seines Fahrrads versperrt wäre. Individuell kurzfristig kann das Rad entweder mit oder ohne Antrieb nutzen, sogar in Anpassung an die aktuelle Tagesform, eine Tourenplanung oder den generellen Trainingszustand. Es ist dem Kunden auch überlassen, wann oder ob er sich überhaupt für einen Umstieg zum E-Antrieb entscheidet.

Da dieses Antriebskonzept von Crosscountry bis Freeride eingesetzt werden soll, ist auch die Zielgruppe entsprechend breit gefächert. Dem Extrembiker soll noch mehr Spaß am Bike-Sport ermöglicht werden. Der Tourfahrer soll mit dem Antrieb die Reichweite optional verlängern können. Auch Nutzer, die körperlich eingeschränkt sind, oder wegen gesundheitlicher Probleme auf einen zusätzlichen Antrieb nicht verzichten können, sollen in diesem Rad einen gefälligen Begleiter finden. Besonders Kunden, die den Pedelec unentschlossen gegenüber stehen, soll auf Grund der Ausstattungsfreiheit mit diesem Konzept ein Kaufanreiz geschaffen werden.

In einer Ausführung der Erfindung weist der oder ein zur Halterung eines Energiespeichers und ggfs. auch einer Motor-Getriebe-Einheit ausgebildete/r Rahmenabschnitt ein, insbesondere nach unten offenes, U-Profil oder T-Profil auf. Beide Profilformen bieten neben mechanisch hoher Stabilität auch besonders hohe Variabilität hinsichtlich der Anbringung unterschiedlich leistungsfähiger und somit unterschiedlich dimensionierter Batteriepacks unter Einsatz einfacher Befestigungsmittel. Das U-Profil ermöglicht zudem einen leichten Einbau einer Motor-Getriebe-Einheit. Neben diesen aus derzeitiger Sicht vorteilhaften Profilformen sind aber auch andere grundsätzlich möglich. Des Weiteren ist insbesondere ausschließlich das Unterrohr zur Halterung eines Energiespeichers und ggfs. auch einer Motor-Getriebe-Einheit ausgebildet, während die übrigen Rahmenrohre herkömmlichen Aufbau haben.

Hinsichtlich der konkreten Konstruktion und Dimensionierung kann der vorgeschlagene Rahmen als Mountainbike-Rahmen vom Hardtail oder vom Full-Suspension-Typ ausgeführt sein, die Erfindung kann aber auch in Straßenrad-Rahmen realisiert werden und somit letztlich ein zum Elektrofahrrad aufrüstbares Touren- oder City- oder Cross-Rad oder andere moderne Fahrradtypen ergeben.

In einer weiteren Ausführungsform des Rahmens ist ein Adapterring zum Einpassen eines mechanischen Tretlagers in das - im Hinblick auf den größeren Durchmesser eines derzeitigen Elektroantriebs größer dimensionierte - Tretlagergehäuse vorgesehen. In künftigen Realisierungen, die auf mögliche kompaktere Tretlagermotoren zugeschnitten sind, kann ein solcher Adapterring aber verzichtbar sein.

In einer weiteren Ausführungsform ist der Rahmen im Bereich des Tretlagergehäuses dahingehend modifiziert, dass er mehr Platz für ein auf der Tretlagerachse sitzendes zusätzliches Zahnrad bietet, welches mit dem Antriebsritzel einer im offenen Rahmenabschnitt sitzenden Motor-Getriebe-Einheit im Eingriff steht.

In einer weiteren Ausführung der Erfindung ist vorgesehen, dass im Tretlagergehäuse nahe zum Anschlusspunkt desjenigen Rahmenabschnitts, der zur Halterung eines Energiespeichers ausgebildet ist, mindestens eine Öffnung zur Unterbringung eines Kontakts zwischen einem eingesetzten Batteriepack und dem Tretlagermotor vorgesehen ist. Durch Steckkontakte lassen sich in vorteilhafter Weise Kabelbaum-Verbindungen zwischen Energiespeicher und Motor vermeiden und somit ein finaler Umbau vom rein muskelbetriebenen zum mit Elektrounterstützung arbeitenden Fahrrad bewerkstelligen.

In einer vorteilhaften Ausführung des Elektrofahrrads sind eine am Fahrradlenker anzubringende Steuereinheit mit drahtloser Sendeeinheit und eine an der Antriebseinheit, bspw. am Tretlagermotor, vorgesehene drahtlose Empfangseinheit zum Empfang der Steuersignale vorgesehen. Auch diese Ausgestaltung trägt zu hoher Zuverlässigkeit des Gesamtaufbaus und zu dessen Flexibilität bei, weil das Verlegen und die fallweise Stilllegung bzw. Entfernung von Verbindungskabeln entfällt.

Das mit der Erfindung vorgeschlagene Batteriepack hat ein Batteriegehäuse, insbesondere aus Kunststoff und mit feuchtigkeitsdichtem Aufbau, das zur sicheren Anbringung im vorgeschlagenen Fahrradrahmen ausgebildet ist, also hierzu geeignete Befestigungsmittel oder aber Öffnungen zum Eingriff von am Rahmen vorgesehenen Befestigungsmitteln hat. Zur Erleichterung eines Nachladens an einer Innenraum-Steckdose oder eines Austauschs sind dies bevorzugt Rastmittel bzw. Schnappverschlüsse, alternativ können aber auch leicht handhabbare Schraubverbindungen, elastische Spannbänder o. ä. eingesetzt werden.

Unter praktischen wie auch ästhetischen Gesichtspunkten ist die Grundform des Batteriepacks aus derzeitiger Sicht bevorzugt prismatisch, insbesondere eine Quaderform. Es können aber auch für bestimmte Anwendungen abweichende Grundformen vorteilhaft sein, etwa diejenige eines schiefen Pyramidenstumpfes oder eines Zylinders öder Zylinderabschnitts. Sofern die Motor-Getriebe-Einheit zusammen mit dem Batteriepack im offenen Rahmenteil sitzen soll, ist sie bevorzugt ebenfalls prismatisch, ggfs. aber auch zylindrisch geformt und in ihren Abmessungen auf diejenigen des Batteriepacks abgestimmt.

Erweiterte Nutzungsmöglichkeiten bietet eine weitere Ausführung, bei der dem Tretlagermotor und Batteriepack eine Aufladesteuereinheit zum Generatorbetrieb des Tretlagermotors zum Nachladen des Batteriepacks zugeordnet ist, insbesondere in einer Ausgestaltung, bei der Freilaufmittel zur Entkopplung des Tretlagermotors vom Hinterrad im Generatorbetrieb vorgesehen sind. Der Nutzer kann ein solches Rad einerseits in Fahrzuständen mit geringem Tretkraftbedarf (z.B. beim Bergabfahren oder fahren mit Rückenwindunterstützung) in einem Auflademodus Fahren und hierdurch die Reichweite vergrößern. Andererseits ist, speziell in einer Heimtrainingsanordnung, ein zweifach nutzbringender Hometrainer-Einsatz möglich: zum einen als Fitnesstraining, und zum anderen zum völlig emissionsfreien Nachladen der Akkus.

Die folgenden Aspekte werden beschrieben.
1. Hilfsmotor für ein Fahrrad, wobei der Hilfsmotor
   eine Energiespeichervorrichtung zur Speicherung von Energie,
   eine Antriebsvorrichtung zur Umwandlung von in der Energiespeichervorrichtung gespeicherten Energie in Bewegungsenergie, und
   eine Getriebeeinrichtung zur Übertragung der Bewegungsenergie auf eine Tretkurbelachse, aufweist
   wobei der Hilfsmotor ausgelegt ist, an einem Unterrohr eines Fahrrads und zumindest im Wesentlichen parallel zu dem Unterrohr angebracht zu werden und eine Tretkurbel des Fahrrads anzutreiben.
   Ein derartig ausgestalteter Hilfsmotor, der insbesondere die Energiespeichervorrichtung umfasst und an einem Unterrohr eines Fahrrads montiert bzw. angebracht werden kann, stellt eine kompakte Einheit dar. Insbesondere ist von Vorteil, dass ein derartiger Motor kompakt ausgebildet sein kann und keine Verkabelung mit externen Komponenten (beispielsweise externen Energiespeichervorrichtungen) benötigt. Damit wird die beschriebene Aufgabe insbesondere von dem Gegenstand des ersten Aspektes gelöst.
2. Fahrrad mit einem Hilfsmotor nach Aspekt 1, wobei der Hilfsmotor an einem Unterrohr des Fahrrads angebracht ist.
   Freilich ist es auch besonders bevorzugt, ein entsprechendes Fahrrad bereitzustellen.
3. Fahrrad bzw. Hilfsmotor nach einem der vorhergehenden Aspekte, wobei die Energiespeichervorrichtung und die Antriebsvorrichtung in Längsrichtung hintereinander positionierbar sind und sich zumindest die Energiespeichervorrichtung und die Antriebsvorrichtung zusammengenommen in Längsrichtung nicht über die Länge des Unterrohrs hinaus erstrecken.
   Durch eine derartige Ausgestaltung wird vorzugsweise die kompakte und einfach zu handhabende Ausgestaltung des Fahrrads/Hilfsmotors in vorteilhafter Weise weiter gewährleistet, was vorteilhafte Auswirkungen auf die Aerodynamik haben kann und aus ästhetischen Aspekten erwünscht sein kann.
4. Fahrrad bzw. Hilfsmotor nach einem der vorhergehenden Aspekte, wobei der Hilfsmotor in einer beliebigen, zur Längsrichtung senkrechten Schnittebene eine Breite von 9 cm, vorzugsweise 7 cm, besonders bevorzugt 5 cm nicht überschreitet.
   Auch eine Begrenzung der Dimensionen in einer Querrichtung, ebenso wie die geometrische Ausbildung, bspw. mit abgerundeten Ecken oder als Halboval, kann zu einer vorteilhaften aerodynamischen und ästhetischen Ausgestaltung des Gegenstandes beitragen.
5. Fahrrad bzw. Hilfsmotor nach einem der vorhergehenden Aspekte, wobei die Energiespeichervorrichtung zur Speicherung von elektrischer Energie ausgelegt ist und vorzugsweise mindestens eine Batterie, ein Batteriepack, einen Akku und/oder einen Akkupack aufweist aufweist.
   Obwohl auch andere Energiespeichervorrichtungen denkbar sind, ist es besonders bevorzugt, dass die Energiespeichervorrichtung in Form von Akkus und/oder Batterien ausgebildet ist. Dies kann eine einfache Handhabung und einen vorteilhaften Betrieb weiter gewährleisten.
6. Fahrrad bzw. Hilfsmotor nach einem der vorhergehenden Aspekte, das bzw. der weiter ein Gehäuse aufweist, das ausgelegt ist,
   zumindest die Energiespeichervorrichtung und die Antriebsvorrichtung in einer Umfangsrichtung zumindest teilweise zu umgeben und
   sich in einer Längsrichtung zumindest im Wesentlichen vollständig über die Energiespeichervorrichtung und die Antriebsvorrichtung zu erstrecken.
   Ein solches Gehäuse kann verschiedene Elemente des Hilfsmotors, insbesondere die Energiespeichervorrichtung, die Antriebsvorrichtung und die Getriebeeinrichtung schützen - insbesondere vor Verschmutzung, beispielsweise durch aufgewirbelten Dreck. Ebenso kann ein solches Gehäuse auch vor Einwirkungen von Flüssigkeiten, insbesondere Wasser (z.B. Regenwasser und Spritzwasser beim Fahren) geschützt werden und weiter vor Schlägen, beispielsweise durch kleine Steinchen, die beim Fahren aufgewirbelt werden. Weiter kann ein solches Gehäuse die aerodynamischen und/oder ästhetischen Eigenschaften weiter verbessern.
   Ein solches Gehäuse, das auch Teile des Unterrohrs umfassen kann, muss nicht zwingend durchgängig sein, auch wenn dies bevorzugt ist. Gemäß anderer bevorzugter Ausführungsformen kann ein solches Gehäuse aber auch Löcher und Freiflächen umfassen. Das Vorsehen solcher Strukturen kann zum Beispiel sinnvoll sein, wenn der Hilfsmotor gelüftet und/oder gekühlt werden soll.
7. Fahrrad bzw. Hilfsmotor nach Aspekt 6, wobei das Gehäuse Kunststoff, Faserverbundstoffe, insbesondere Carbon und/oder Aluminium aufweist.
   Derartige Stoffe können besonders vorteilhaft sein, da sie einerseits eine relative große Feste bzw. Steifigkeit aufweisen und andererseits relativ leicht sind und damit das Gesamtgewicht des Fahrrads bzw. des Hilfsmotors nicht übermäßig erhöhen.
8. Fahrrad bzw. Hilfsmotor nach einem der Aspekte 6 oder 7, wobei das Gehäuse ausgelegt ist, an mehreren Punkten, vorzugsweise an drei, vier oder fünf Punkten an dem Unterrohr des Fahrrads befestigt zu werden.
   Besonders bevorzugt ermöglicht eine solche Befestigungsweise des Gehäuses am Unterrohr des Fahrrads eine zugleich einfache, benutzerfreundliche und ebenso einfache Montage bzw. Anbringung und Demontage des entsprechenden Hilfsmotors am Fahrrad. Der Hilfsmotor ist vorzugsweise austauschbar mit dem Rahmen verbunden. Bevorzugt, mit einer optisch an den Rahmen angepassten bzw. zu diesem baugleichen Blende. Diese kann die Aussparung im Unterrohr beim herkömmlichen MTB-Betrieb auffüllen. Diese Blende ist vorzugsweise eine Halbschale, ähnlich wie die Außenschale des Antriebs. Die Blende ist vorzugsweise derart ausgelegt, dass sie als Stauraum für Werkzeug oder Proviant genutzt werden kann. Dies erhöht vorzugsweise den Kundennutzen.
9. Fahrrad bzw. Hilfsmotor nach einem der vorhergehenden Aspekte, wobei das Gehäuse des Hilfsmotors Vertiefungen, vorzugsweise 3 Vertiefungen, zur Befestigung des Hilfsmotors am Fahrrad aufweiset, die vorzugsweise eine elastische Dämpfung, die zum Beispiel Kautschuk aufweist, und einen über der Dämpfung liegenden härteren Auflagebreich umfassen, der zum Beispiel Metall, insbesondere Aluminium, aufweist und wobei das Unterrohr des Fahrrads vorzugsweise Vorsprünge aufweist, die ausgelegt sind, mit den Vertiefungen in Verbindung gebracht zu werden und hierdurch den Hilfsmotor an das Unterrohr des Fahrrads zu befestigen.
   Eine derartige Ausgestaltung der Befestigung des Gehäuses am Unterrohr des Fahrrads kann ebenso zu einer einfachen. Benutzerfreundlichen und sicheren Handhabung beitragen.
10. Fahrrad bzw. Hilfsmotor nach einem der vorhergehenden Aspekte, wobei der Hilfsmotor und insbesondere ein Gehäuse ausgelegt ist, einen glatten Übergang mit dem Unterrohr zu bilden, insbesondere sodass die Kombination aus Hilfsmotor und Unterrohr dem Unterrohr eines gewöhnlichen Fahrrads ähnelt oder gleicht.
   Unter einem glatten Übergang wird insbesondere ein stufenloser Übergang verstanden bzw. ein Übergang, bei dem die übergehenden Elemente (hier: Gehäuse und Unterrohr) im Wesentlichen direkt bzw. bündig ineinander übergehen. Vorzugsweise beträgt ein maximaler Abstand zwischen den übergehenden Elementen nicht mehr als einige wenige Millimeter und besonders bevorzugt weniger als einen Millimeter. Besonders bevorzugt ist die Formgebung des Gehäuses an die des Unterrohrs angepasst bzw. umgekehrt, sodass der Eindruck eines glatten Übergangs weiter verstärkt wird. Vorzugsweise ist an Rahmen und/oder Gehäuse eine Dichtung vorgesehen, die die beiden Teile gegeneinander abdichtet. Das Vorsehen eines glatten Übergangs kann die aerodynamischen Eigenschaften im Vergleich zu den Lösungen aus dem Stand der Technik weiter verbessern. Ebenso kann eine solche Lösung optisch bzw. ästhetisch besonders ansprechend sein, sodass ein Fahrrad mit Hilfsantrieb nicht oder nur sehr schwer von einem gewöhnlichen Fahrrad unterschieden werden kann. Dies kann weiter zur Akzeptanz eines solchen Hilfsmotors bzw. eines solchen Fahrrads beitragen.
11. Fahrrad bzw. Hilfsmotor nach einem der vorhergehenden Aspekte, wobei der Hilfsmotor einen Freilauf aufweist, der vorzugsweise in der Getriebeeinrichtung angeordnet ist.
   Das Vorsehen eines Freilaufs ist insbesondere deswegen bevorzugt, weil hierdurch die Rotation des Motors von der Rotation einer Kurbelachse entkoppelt werden kann. Dies ist insbesondere dann wünschenswert, wenn ein Benutzer des Fahrrads die Kurbelachse in Bewegung setzt, ohne dass der Motor zur Bewegung einen Beitrag leistet.
12. Fahrrad bzw. Hilfsmotor nach einem der vorhergehenden Aspekte, wobei der gesamte Hilfsmotor in einer Längsrichtung kürzer ist als eine Länge des Unterrohrs bzw. eine Länge von 80 cm, vorzugsweise 70 cm, besonders bevorzugt 60 cm nicht überschreitet.
   Eine derartige Limitierung der Dimensionen des Hilfsmotors trägt weiter zur kompakten Ausgestaltung des Hilfsmotors bei.
13. Fahrrad bzw. Hilfsmotor nach einem der vorhergehenden Aspekte, wobei der Hilfsmotor dazu ausgelegt ist, Bewegungsenergie, die über eine Tretkurbelachse und die Getriebeeinrichtung auf die Antriebsvorrichtung übertragen wird, in von der Energiespeichervorrichtung gespeicherte bzw. speicherbare Energie umzuwandeln und in der Energiespeichervorrichtung zu speichern.
   In anderen Worten kann der Motor gemäß dieser Ausführungsform also Bewegungsenergie in elektrische, gespeicherte Energie umwandeln. Dies könnte beispielsweise derart genutzt werden, dass ein Benutzer die Energiespeichervorrichtung auflädt, indem er eine Kurbelwelle in Bewegung versetzt, ohne, dass dadurch ein Weggewinn erzielt wird - zum Beispiel könnte ein Benutzer ein entsprechendes Fahrrad zu Hause "aufbocken" oder ein Hinterrad derart lagern, dass eine Rotation eines angetriebenen Hinterrads nicht zu einer Fortbewegung des Fahrrads führen. Dann könnte die vom Benutzer bereitgestellte Energie in Speicherenergie umgewandelt und abgespeichert werden. In einer besonders bevorzugten Ausführungsform kann der Benutzer die Leistung, die abgespeichert werden soll (beispielsweise die Wattzahl) einstellen, sodass er hierüber seine Belastung steuern kann. Des Weiteren kann somit vorzugsweise auch bei der Fahrt der Speicher aufgeladen werden.
14. Regeleinheit für einen Hilfsmotor bzw. für ein Fahrrad nach einem der vorhergehenden Aspekte, wobei die Regeleinheit eine Drehzahl als Regelgröße aufweist und ausgelegt ist, einen zeitlichen Verlaufs der vom Hilfsmotor verbrauchten Energie zu erfassen, und vorzugsweise auf Grundlage der Auswertung zu erfassen, ob der Hilfsmotor eine Last zur Beibehaltung der Drehzahl alleine trägt.
   Eine derartige Regeleinheit muss lediglich den zeitlichen Verbrauch der Energie, also die Leistung erfassen. Bei einem elektrischen Hilfsmotor kann dies beispielsweise über eine Messung des Stromverbrauchs erfolgen. Die Regeleinheit kann daher sehr einfach und kompakt ausgebildet sein und zum kompakten und einfachen Aufbau und Steuerung des Hilfsmotors bzw. des Fahrrads beitragen.
   Grundsätzlich kann der Hilfsmotor dazu ausgelegt sein, nur dann Leistung zu liefern, wenn ein Benutzer zumindest einen Teil der Last, die zur Fortbewegung notwendig ist, selber trägt. In einem solchen Fall kann eine Regeleinheit wie beschrieben dazu ausgelegt sein, festzustellen, ob der Hilfsmotor eine Last zur Beibehaltung einer Drehzahl alleine trägt. In anderen Worten, wird festgestellt, ob bzw. dass der Benutzer selbst eine Leistung erbringt, also in die Pedale tritt. Dies kann zum Beispiel wie folgt erfolgen.
   Der Hilfsmotor wird auf eine entsprechende Drehzahl eingestellt. Zur Beibehaltung diese Drehzahl ist eine gewisse Last bzw. Leistung erforderlich (als Beispiel sollen hier 150 Watt dienen). Diese wird teilweise vom Motor und teilweise von einem Benutzer bereitgestellt. Die vom Benutzer bereitgestellte Leistung verläuft im Wesentlichen unkonstant. Die Kraft, die ein Benutzer auf Pedale an einem Fahrrad ausübt, variiert zeitlich sehr stark: Sie ist minimal in der Stellung, in der die Pedale an ihrem höchsten bzw. tiefsten Punkt sind und maximal an dem Ort, wo die Pedale im Wesentlichen die gleiche Höhe einnehmen. Zwischen diesen Extremen verläuft die Kraft im Wesentlichen sinusförmig. Um eine festgelegte Drehzahl zu erzielen, muss eine im Wesentlichen konstante Gesamtlast bzw. Gesamtleistung bereitgestellt werden. Die vom Motor bereitgestellte Leistung errechnet sich allgemein aus der gewünschten Gesamtleistung abzüglich der vom Benutzer bereitgestellten Leistung. Ist diese vom Nutzer bereitgestellte Leistung nun zeitlich variabel, zum Beispiel sinusförmig, so ist auch die vom Motor bereitgestellte und vom Motor verbrauchte Leistung zeitlich variabel, zum Beispiel sinusförmig.
   Hierdurch kann an Hand einer vom Hilfsmotor verbrauchten Leistung bzw. an Hand des vom Hilfsmotor verbrauchten Stromes festgestellt werden, ob der Hilfsmotor eine Last zur Beibehaltung einer Drehzahl alleine trägt.
   In einer besonders bevorzugten Ausführungsform ist die Regeleinheit ausgelegt, den Hilfsmotor abzuschalten bzw. ein Warnsignal auszugeben, wenn sie feststellt, dass der Hilfsmotor eine Last zur Beibehaltung einer Drehzahl über eine gewisse, vorzugsweise voreingestellte Zeit, alleine trägt.
15. Regeleinheit für einen Hilfsmotor bzw. für ein Fahrrad nach Aspekt 14, wobei die Regeleinheit eine vom Hilfsmotor bereitgestellte Leistung abhängig von einem physiologischen Belastungsparameter eines Benutzers regelt.
   Vorzugsweise ist der physiologische Belastungsparameter der Puls bzw. die Herzfrequenz eines Benutzers. Weiter ist es bevorzugt, dass die bereitgestellte Leistung derart geregelt wird, dass sie mit zunehmender Belastung des Benutzers zunimmt. Beispielsweise kann es bevorzugt sein, dass dem Benutzer ein entsprechenden Belastungsbereich mit Belastungsgrenzen zugewiesen ist. Ist der Benutzer unterhalb der unteren Belastungsgrenze, so wird keine Leistung vom Hilfsmotor bereitgestellt. Ist der Benutzer oberhalb der oberen Belastungsgrenze, so wird Leistung vom Motor bereitgestellt. Hierdurch kann der Benutzer in dem von ihm voreingestellten Belastungsbereich trainieren.
   Vorzugsweise kann die Regeleinheit auch einen Hangneigungssensor umfassen, der eine Neigung eines befahrenen Hangs erfassen kann. In einem solchen Fall ist es besonders bevorzugt, dass die Regeleinheit eine vom Hilfsmotor bereitgestellte Leistung in Abhängigkeit von der Neigung des befahrenen Hangs regelt. So kann die Regeleinheit zum Beispiel derart ausgestaltet sein, dass sie die vom Hilfsmotor bereitgestellte Leistung derart regelt, dass sie ein Abrufen einer hohen bzw. einer Maximalleistung an einem Hang mit starker Neigung umfasst. Eine solche Regel- bzw. Steuereinheit kann zum Beispiel sinnvoll sein, insbesondere weil die Belastungsparameter eines Benutzers, beispielsweise der Puls, sich erst mit einer gewissen Verzögerung (beispielsweise von ca. 20 bis 30 Sekunden) an eine Belastung anpassen. Daher kann es sinnvoll sein, anstatt oder zusätzlich zu einer reinen Regelung an physiologische Belastungsparameter auch eine Regelung an die aktuellen Streckenverhältnisse, insbesondere die aktuelle Steigung, vorzusehen.
16. Hilfsmotor bzw. Fahrrad nach einem der Aspekte 1 bis 13 mit einer Regeleinheit nach einem der Aspekte 14 oder 15.
17. Antriebsadapter zur Herstellung einer Wirkverbindung zwischen einem Hilfsmotor nach einem der Aspekte 1 bis 13 oder 16 und einer Tretkurbelachse eines Fahrrads, vorzugsweise nach einem der Aspekte 2 bis 13 oder 16, wobei der Antriebsadapter
   eine Hohlachse aufweist, die ausgelegt ist, einen Teilbereich der Tretkurbelachse koaxial zu umgeben bzw. auf diesen aufgesteckt zu werden,
   ein Zahnrad aufweist, das ausgelegt ist, mit einem Ritzel, insbesondere einem An- oder Abtriebsritzel, in Wirkeingriff zu sein, und
   einen Flansch zur Befestigung an einer Tretkurbel, vorzugsweise an einem Zahnkranz aufweist
   wobei das Zahnrad mit der Hohlachse verbunden ist und wobei Flansch und Zahnrad vorzugsweise an einander gegenüberliegenden Enden der Hohlachse angeordnet sind.
   Ein derartiger Antriebsadapter trägt weiter zur einfachen Ausgestaltung eines Fahrrads mit einem entsprechenden Hilfsmotors bei. Anders als bei den Systemen, die aus dem Stand der Technik bekannt sind, müssen die entsprechenden Komponenten nicht zeit- und kostenaufwendig ausgetauscht werden, sondern der entsprechende Adapter kann mit Standard-Komponenten verwendet werden. Daher löst auch dieser Antriebsadapter, insbesondere in Kombination mit den Gegenständen der anderen unabhängigen Aspekte die beschriebene Aufgabe.
17a. Antriebsadapter nach Aspekt 17, wobei die Verbindung zwischen dem Zahnrad und der Hohlachse einstückig oder integral ausgebildet ist.
   Durch eine derartige Ausgestaltung kann eine besonders einfache, sichere und feste Verbindung erzielt werden, was den Adapter besonders widerstandsfähig macht.
17b. Antriebsadapter nach Aspekt 17 oder 17a, wobei die Hohlachse ein Außengewinde aufweist und das Zahnrad ein entsprechendes Innengewinde zur Verbindung mit der Hohlachse aufweiset.
   Dies erlaubt vorzugsweise eine ebenso einfache wie sichere Befestigung des Zahnrades auf der Hohlachse, wobei das Gewinde vorzugsweise derart ausgeführt ist, dass es gegen die Betriebsdrehrichtung lösbar ist.
17c. Antriebsadapter nach einem der Aspekte 17 bis 17b, wobei die Verbindung zwischen Zahnrad und Hohlachse durch mehrere Gewindeschrauben erfolgt.
   Diese erstrecken sich vorzugsweise zwischen einem Steg der Hohlachse und einer zur Dreh- bzw. Symmetrieachse des Zahnrades im Wesentlichen senkrechten, vorzugsweise senkrechten, Außenfläche des Zahnrades.
   Weiter ist ein Antriebsadapter bevorzugt, bei dem die Verbindung zwischen dem Zahnrad und der Hohlachse über einen Kontakt einer zu einer Symmetrieachse des Zahnrades senkrechten Außenfläche des Zahnrades hergestellt wird.
   Im Vergleich zum Stand der Technik bietet diese Ausgestaltung einen besonders festen und guten Kontakt zwischen dem Zahnrad einerseits und der Hohlachse andererseits. Besonders bevorzugt weist die Hohlachse einen einstückig damit verbundenen bzw. integral ausgebildeten Kragenbereich auf, auf der das Zahnrad über einen Kontakt zu einer zu seiner Drehachse senkrechten Außenfläche befestigt werden kann.
17d. Antriebsadapter nach einem der Aspekte 17 bis 17e, wobei das Zahnrad vorzugsweise als Tellerrad ausgebildet ist.
17e. Antriebsadapter nach einem der Aspekte 17 bis 17d, wobei die Hohlachse die Breite eines Tretlagergehäuses, bevorzugt um mindestens 10 mm, vorzugsweise mindestens 20mm und insbesondere mindestens 30 mm übersteigt.
   Dies erfolgt vorzugsweise in Abhängigkeit bzw. Abstimmung mit der Breite des Tretlagergehäuses, wobei zur Zeit standardmäßig breiten für Tretlagergehäuse von 68 mm und 73 mm eingesetzt werden.
17f. Antriebsadapter nach einem der Aspekte 17 bis 17e, wobei der Innendurchmesser der Hohlachse derart ist, dass die Tretkurbelachse passgenau bzw. spielfrei in der Hohlachse aufgenommen werden können und vorzugsweise in etwa, besonders bevorzugt etwa 24 mm beträgt.
17g. Antriebsadapter nach einem der Aspekte 17 bis 17f, wobei der Flansch eine Tiefe von 10 mm, vorzugsweise 8 mm, weiter bevorzugt 6 mm und besonders bevorzugt 4 mm nicht übersteigt.
17h. Antriebsadapter nach einem der Aspekte 17 bis 17f, wobei der Flansch eine zu einer Dreh- bzw. Symmetrieachse senkrechte Breite zwischen 25mm und 100mm, bevorzugt zwischen 30 mm und 90 mm, besonders bevorzugt zwischen 40mm und 80mm und insbesondere zwischen 50 mm und 60 mm aufweist.
17i. Antriebsadapter nach einem der Aspekte 17 bis 17h, wobei der Flansch in einer Draufsicht senkrecht zu seiner Symmetrieachse eine im Wesentlichen sternförmige Form mit mehreren um den Umfang verteilten Fortsätzen aufweist, wobei die vorzugsweise 3, 4, 5 oder mehr Fortsätze vorzugsweise eine Breite von 20mm bis 30mm aufweisen.
18. Antriebsadapter nach einem der Aspekte 17, wobei ein Außenumfangsprofil des Antriebsadapters in einer zur Längsachse des Antriebsadapters senkrechten Schnittebene unrund, vorzugsweise formschlüssig und besonders bevorzugt als Vielzahn ausgebildet ist oder abgerundet polygonal, zum Beispiel abgerundet drei-, vier-, oder fünf- ist und wobei der Flansch eine Öffnung mit einem entsprechenden Profil aufweist, sodass eine Kraftübertragung von der Hohlachse auf den Flansch und umgekehrt ermöglicht wird.
   Im Vergleich zu runden Ausgestaltungen des Außenprofils ermöglicht eine unrunde Ausgestaltung einen besonders vorteilhaften Eingriff in andere Elemente, insbesondere auf den Flansch.
   Die unrunde Ausgestaltung kann zum Beispiel durch entsprechende Fräsung der Welle realisiert werden.
   Der Fachmann wird verstehen, dass, wann immer ein Rückbezug zu Aspekt 17 angegeben ist, dies automatisch auch Rückbezüge zu den anderen Aspekten 17a etc. einschließt.
18a. Antriebsadapter nach Aspekt 18, wobei das Außenumfangsprofil über einen Längenbereich von mindestens 10 mm, vorzugsweise mindestens 20mm und insbesondere mindestens 30 mm unrund ist bzw. einen formschlüssigen Verbund ermöglicht.
19. Antriebsadapter nach einem der Aspekte 17 oder 18, wobei der Flansch mittels Schrauben an der Tretkurbel befestigbar ist.
   Vorzugsweise wird der Flansch kettenblattseitig auf die Tretkurbel aufgeschraubt, wobei an der Tretkurbel vorhandene Gewindebohrungen, welche auch zur Befestigung der Kettenblätter dienen, genutzt werden. Bevorzugt für die Adapter-Flansch-Befestigung wird dabei der Gewindelochkreis genutzt, der für das kleinste oder größte Kettenblatt vorgesehen ist. Auch eine Anbringung an ein mittelgroßes Kettenblatt ist möglich.
20. Fahrrad zur Benutzung mit einem Hilfsmotor nach einem der vorhergehenden Aspekte, wobei der Hilfsmotor an ein Unterrohr des Fahrrads montiert ist bzw. montierbar ist.
21. Fahrrad nach einem der Aspekte 2 bis 13, 16 und 20, wobei sich aus der Kombination aus Hilfsmotor und Unterrohr eine Unterrohrstruktur ergibt, die in einer beliebigen zur Längsachse des Unterrohrs senkrechten Schnittebene eine Breite von 9 cm, 7 cm, 5 cm nicht überschreitet.
   Dies führt abermals zu einer geeigneten Stabilität des Fahrrads einerseits und positiven aerodynamischen und ästhetischen Aspekten andererseits.
22. Fahrrad nach einem der Aspekte 2 bis 13, 16 und 20 bis 21, wobei das Unterrohr des Fahrrads ausgelegt ist, einen Hilfsmotor nach einem der obigen Aspekte aufzunehmen, und vorzugsweise einen glatten Übergang mit dem Hilfsmotor zu bilden, insbesondere sodass die Kombination aus Hilfsmotor und Unterrohr dem Unterrohr eines gewöhnlichen Fahrrads ähnelt oder gleicht.
23. Fahrrad nach einem der Aspekte 2 bis 13, 16 und 20 bis 22, wobei das Unterrohr des Fahrrads eine planare Fläche aufweist, die für die Anbringung des Hilfsmotors geeignet ist.
   Ebenfalls ist es möglich, dass die Fläche nicht planar ist. So kann ein Schnitt, der zur Unterrohrachse senkrecht ist, auch ein Kreisbogen oder ein Trapez sein. Durch eine entsprechende Ausgestaltung des Profils kann eine optimale Bauraumausnutzung im Unterrohr einerseits und eine festigkeitssteigernde Unterrohrstruktur erreicht werden.
24. Fahrrad nach einem der Aspekte 2 bis 13, 16 und 20 bis 23, wobei das Unterrohr auch ohne weitere Elemente, insbesondere ohne einen Hilfsmotor tragend ist.
25. Fahrrad nach einem der Aspekte 2 bis 13, 16 und 20 bis 24, wobei das Unterröhr T- oder U-förmig ausgebildet ist und/oder einen vertieften Bereich aufweist, und wobei das Unterrohr zur Aufnahme des Hilfsmotors ausgebildet ist.
   Auch eine Blende bzw. ein Leergehäuse wird beschrieben, die den vertieften Bereich bzw. eine Aussparung im Unterrohr überdecken bzw. auffüllen kann. Eine solche Blende kann verwendet werden, wenn ein Fahrrad ohne den Motor bzw. im "normalen Betrieb" verwendet werden soll. Vorzugsweise weist diese Blende eine Halbschale auf, die einer Außenschale bzw. dem Gehäuse eines Hilfsmotors ähnlich sein kann. Bei Benutzung einer solchen Blende kann der Raum, der sich zwischen Blende und Unterrohr bildet auch als Stauraum für Werkzeug und/oder Proviant genutzt werden. Dies führt zu einem zusätzlichen Nutzen für den Benutzer, der ein entsprechendes Fahrrad sowohl mit als auch ohne Hilfsmotor einsetzen kann.
A1. Fahrrad bzw. Fahrradrahmen, vorzugsweise nach einem der Aspekte 2 bis 13, 16 und 20 bis 25, mit mindestens einem Rahmenabschnitt, der zur abnehmbaren Halterung eines separaten Energiespeichers bzw. einer Energiespeichervorrichtung, insbesondere eines Batteriepacks, ausgebildet ist und Befestigungsmittel und/oder Öffnungen zum Einsetzen solcher zur Fixierung des Energiespeichers aufweist, und einem Tretlagergehäuse, das zur alternativen Aufnahme eines Tretlagermotors oder eines mechanischen Tretlagers, insbesondere in Verbindung mit einem Adapterring, ausgebildet ist.
A2. Fahrrad bzw. Fahrradrahmen nach einem der Aspekte 2 bis 13, 16 und 20 bis 25 und A1, wobei der oder ein zur Halterung eines Energiespeichers ausgebildeter Rahmenabschnitt ein, insbesondere nach unten offenes, U-Profil oder T-Profil aufweist.
A3. Fahrrad bzw. Fahrradrahmen nach einem der Aspekte 2 bis 13, 16 und 20 bis 25 und A1 bis A2, wobei ausschließlich das Unterrohr zur Halterung eines Energiespeichers ausgebildet ist.
A4. Fahrrad bzw. Fahrradrahmen nach einem der Aspekte 2 bis 13, 16 und 20 bis 25 und A1 bis A3, wobei im Tretlagergehäuse nahe zum Anschlusspunkt desjenigen Rahmenabschnitts, der zur Halterung eines Energiespeichers ausgebildet ist, mindestens eine Öffnung zur Unterbringung eines Kontakts zwischen einem eingesetzten Batteriepack und dem Tretlagermotor vorgesehen ist.
A5. Fahrrad bzw. Fahrradrahmen nach einem der Aspekte 2 bis 13, 16 und 20 bis 25 und A1 bis A4, versehen mit einem Adapterring zum Einpassen eines mechanischen Tretlagers in das Tretlagergehäuse.
A6. Fahrrad bzw. Fahrradrahmen, nach einem der Aspekte 2 bis 13, 16 und 20 bis 25, mit mindestens einem Rahmenabschnitt, der zur abnehmbaren Halterung eines separaten Energiespeichers, insbesondere eines Batteriepacks, und einer separaten Motor-Getriebe-Einheit ausgebildet ist und Befestigungsmittel und/oder Öffnungen zum Einsetzen solcher zur Fixierung des Energiespeichers und der Motor-Getriebe-Einheit aufweist.
A7. Fahrrad bzw. Fahrradrahmen nach Aspekt A6, mit einem Tretlagergehäuse, das zur Aufnahme eines zusätzlichen Antriebsrades zum Eingriff mit einem Abtriebsritzel der Motor-Getriebe-Einheit ausgebildet ist.
A8. Fahrrad bzw. Fahrradrahmen nach einem der Aspekte 2 bis 13, 16 und 20 bis 25 und A1 bis A7, ausgeführt als Mountainbike-Rahmen vom Hardtail- oder Full-Suspension-Typ.
A9. Batteriepack zum Einsatz in einem Fahrrad bzw. Fahrradrahmen nach einem der Aspekte 2 bis 13, 16 und 20 bis 25 und A1 bis A8, mit einem Batteriegehäuse, welches Befestigungsmittel, insbesondere Rastmittel, und/oder Öffnungen zur Aufnahme solcher zum Einsetzen in einen hierfür ausgebildeten Rahmenabschnitt aufweist.
A10. Batteriepack nach Aspekt A8, wobei das Batteriegehäuse die Grundform eines Prismas, insbesondere Quaders, aufweist.
A11. Batteriepack nach Aspekt A9 oder A10, wobei das Batteriegehäuse oder ein Teil desselben zur gemeinsamen Unterbringung einer Motor-Getriebe-Einheit mit Batterien ausgebildet ist.
A12. Satz von Batteriepacks nach einem der Aspekte A9 - A11, mit unterschiedlicher Speicherkapazität und mindestens in soweit übereinstimmenden Dimensionen, dass die Batteriepacks des Satzes in ein und denselben Fahrradrahmen eingesetzt und dort fixiert werden können.
A13. Elektrofahrrad mit einem Fahrrad bzw. einem Fahrradrahmen nach einem der Aspekte 2 bis 13, 16 und 20 bis 25 und A1 bis A8, einem Tretlagermotor und einem Batteriepack nach Aspekt A9 oder A10.
A14. Elektrofahrrad nach Aspekt A13, wobei das Batteriepack über einen Steckkontakt mit dem Tretlagermotor verbunden ist.
A15. Elektrofahrrad nach Aspekt A13 oder A14, wobei der Tretlagermotor eine mit der Tretlagerachse konzentrische Motor-Getriebe-Anordnung aufweist.
A16. Elektrofahrrad nach einem der Aspekte A13 - A15, wobei dem Tretlagermotor oder der Motor-Getriebe-Einheit und Batteriepack eine Aufladesteuereinheit zum Generatorbetrieb zum Nachladen des Batteriepacks zugeordnet ist.
A17. Elektrofahrrad nach Aspekt A16, wobei Freilaufmittel zur Entkopplung des Tretlagermotors oder der Motor-Getriebe-Einheit vom Hinterrad im Generatorbetrieb vorgesehen sind.
A18. Elektrofahrrad mit einem Fahrradrahmen nach Aspekt A6 oder A7, einer in den Rahmen einbaufähigen Motor-Getriebe-Einheit und einem Batteriepack nach einem der Aspekte A9-A11.
A19. Elektrofahrrad nach einem der Aspekte A13 - A18, wobei eine am Fahrradlenker anzubringende Steuereinheit mit drahtloser Sendeeinheit und eine am Tretlagermotor oder der Motor-Getriebe-Einheit vorgesehene drahtlose Empfangseinheit zum Empfang der Steuersignale vorgesehen sind.
A20. Heimtrainingsanordnung mit einem Elektrofahrrad nach einem der Aspekte A16 - A19 und einem Bodenständer, der zur Aufstellung des Elektrofahrrads zu einem Heimtrainerbetrieb ausgebildet ist.

Vorteile und Zweckmäßigkeiten der Erfindung ergeben sich im Übrigen aus der nachfolgenden Beschreibung von Ausführungsbeispielen anhand der Figuren. Von diesen zeigen:
Fig. 1 eine vereinfachte perspektivische Detailansicht eines Fahrradrahmens,
Fig. 2 eine perspektivische Explosionsdarstellung des Fahrradrahmens nach Fig. 1 zusammen mit einem Tretlagermotor und einem Batteriepack,
Fig. 3 eine Ansicht des mit dem Tretlagermotor und Batteriepack bestückten Fahrradrahmens,
Fig. 4A und 4B Prinzipsskizzen (Ausschnittdarstellungen) zweier weiterer Ausführungsformen des Rahmens,
Fig. 5 eine schematische Darstellung eines Satzes von Batteriepacks,
Fig. 6 eine schematische Darstellung eines Ausführungsbeispiels des Elektrofahrrads in einer Heimtrainingsanordnung,
Fig. 7 eine schematische Darstellung eines Ausführungsbeispieles des erfindungsgemäßen Fahrradrahmens,
Fig. 8 eine schematische perspektivische Darstellung der Anordnung der Antriebskomponenten bei dieser Ausführung,
Fig. 9 eine perspektivische Darstellung zur Erläuterung der Schnittstelle zwischen Antrieb und Tretachse und
Fig. 10A bis 10D Prinzipskizzen von konstruktiven Ausgestaltungen im Bereich des Batteriepacks bzw. der Motor-Getriebe-Einheit.
Fig. 11 zeigt eine perspektivische Ansicht eines Fahrrads mit einem Hilfsmotor bzw. einer Blende.
Fig. 12 zeigt eine teilweise Durchsicht eines Fahrrads mit einem Hilfsmotor gemäß einer Ausführungsform der Erfindung.
Fig. 13a und 13b zeigen Draufsichten auf einen Hilfsmotor und eine Blende.
Fig. 14 zeigt eine teilweise perspektivische Durchsicht auf einen Hilfsmotor.
Fig. 15a bis c illustrieren die Montage eines Hilfsmotors.
Fig. 16 zeigt eine teilweise perspektivische Durchsicht auf einen Teilbereich eines Hilfsmotors, einer Rotationsübertragungseinheit und einem Antriebskurbeladapter, der in einem Tretlagergehäuse eines Fahrrads angeordnet ist.
Fig. 17a und b zeigen Antriebsadapter in Wirkverbindung mit einer Rotationsübertragungseinheit.
Fig. 18 zeigt eine perspektivische, schematische Ansicht eines Antriebsadapters.
Fig. 19 zeigt eine vergrößerte Detailansicht eines Bereichs eines Hilfsmotors in teilweiser Durchsicht.

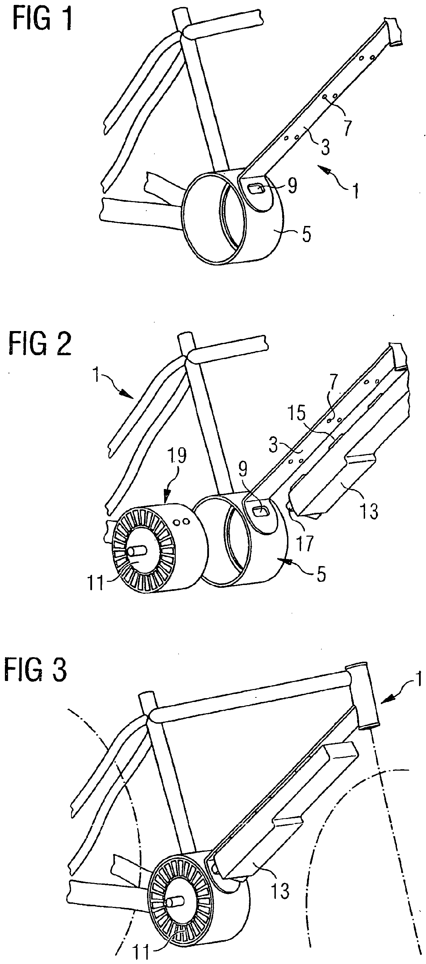

Fig. 1 zeigt (teilweise angeschnitten) einen Fahrradrahmen 1, dessen Unterrohr 3 als Flach- bzw. Bandprofil ausgeführt ist, welches sich vom Steuerrohr zu einem Tretlagergehäuse 5 hin verbreitert und eine Mehrzahl von Befestigungsöffnungen 7 zur Befestigung eines Batteriepacks aufweist. Die übrigen Rahmenrohre sind konventionell ausgeführt. Das Tretlagergehäuse 5 hat gegenüber einem herkömmlichen Tretlagergehäuse sowohl vergrößerten Durchmesser als auch eine höhere Breite und weist nahe dem Anschlusspunkt des unteren Rahmenrohres 3 eine Öffnung 9 auf.

Fig. 2 zeigt diesen Rahmen zusammen mit einem Tretlagermotor (bzw. einer Elektromotor-Getriebe-Einheit) 11 und einem Batteriepack 13 vor deren Einsetzen in den Rahmen. Das Batteriepack 13 hat in ihrer Lage zu den Öffnungen 7 am unteren Rahmenrohr 3 korrespondierende Befestigungsmittel 15 und einen Kontaktabschnitt 17 an seiner unteren Stirnfläche. Am Tretlagermotor 11 ist ebenfalls ein Kontaktabschnitt 19 zu erkennen; Befestigungsmittel zur Fixierung des Tretlagermotors im Tretlagergehäuse 5 sind in der Figur nicht gezeigt. Die Kontaktabschnitte 17 und 19 am Batteriepack bzw. Motor sind so platziert und geformt, dass sie durch die Öffnung 9 im Tretlagergehäuse 5 einen direkten elektrischen Kontakt (Steckkontakt) zwischen dem Motor und seiner Stromversorgung herstellen, ohne dass eine Verkabelung erforderlich ist. Fig. 3 zeigt den betriebsfertig montierten Fahrradrahmen 1 mit eingesetzten Tretlagermotor 11 und Batteriepack 13.

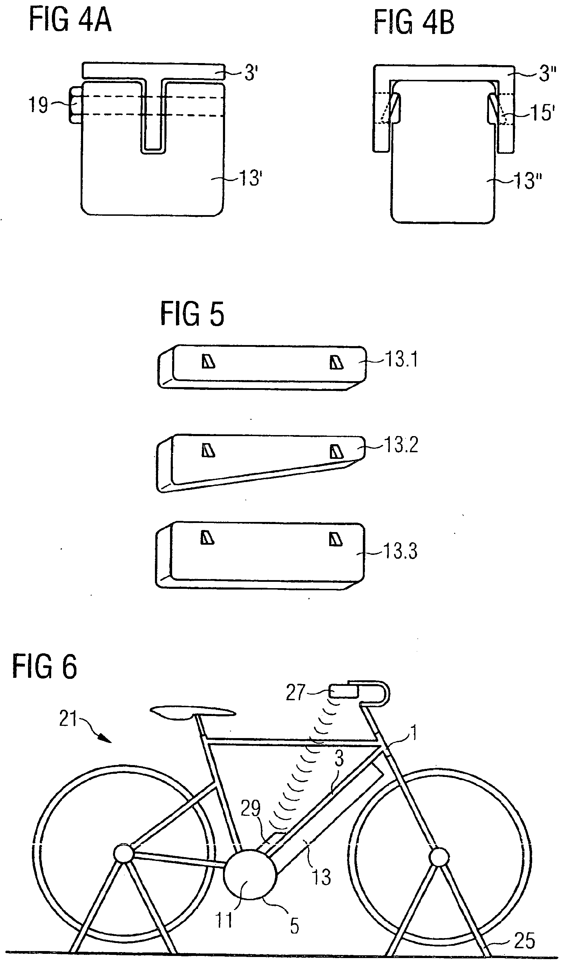

Fig. 4A und 4B zeigen, dass an Stelle des in der weiter oben beschriebenen Ausführung verwendeten Flachprofils ein T-Profil 3' mit im Querschnitt angepasstem Batteriepack 13' und separaten Befestigungsschrauben 19 (Fig. 4A) oder ein U-Profil 3" mit daran angepasstem Batteriepack 13" mit seitlich angeformten Rasthacken 15' verwendet werden kann.

Fig. 5 zeigt drei Batteriepacks 13.1, 13.2 und 13.3 zum Einsatz in einem konstruktiv angepassten Fahrradrahmen, die über gleichartig ausgeführte und angeordnete (nicht gesondert bezeichnete) Befestigungsmittel, aber unterschiedliches Volumen und damit auch unterschiedliche Speicherkapazität verfügen und zusammen einen Satz von Batteriepacks bilden, aus denen der Nutzer ein seinen Bedürfnissen entsprechendes auswählen kann.

Fig. 6 zeigt skizzenartig eine Heimtrainingsanordnung 21 mit einem Elektrofahrrad 23 in einem Bodenständer 25, in dem das Rad ohne Bodenkontakt der Räder gehaltert ist. Neben den bereits in anderen Figuren gezeigten und weiter oben erläuterten Teilen Unterrohr 3 und Tretlagergehäuse 5 und den Anbaukomponenten Tretlagermotor 11 und Batteriepack 13 ist hier auch eine am Fahrradlenker angebrachte Steuereinheit 27 mit drahtloser (nicht gesondert bezeichneter) Sendeeinheit und eine am Tretlagermotor angebrachte drahtlose Empfangseinheit 29 zum Empfang von Steuersignalen zu erkennen. Die Steuereinheit umfasst eine Aufladesteuereinheit zum Generatorbetrieb des Tretlagemotors 11, speziell zum Heimbetrieb in der dargestellten Anordnung.

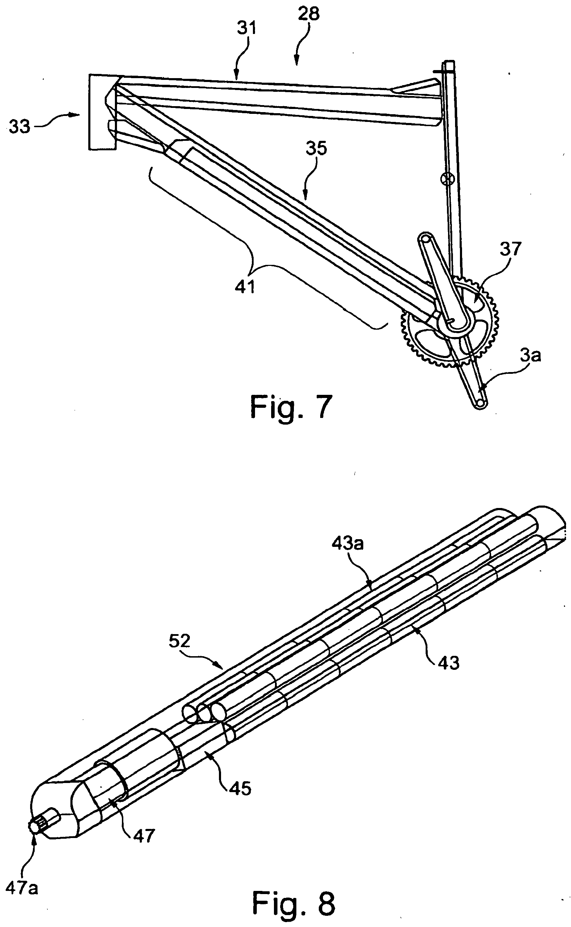

Fig. 7 zeigt als wesentliche Teile eines erfindungsgemäßen Fahrrades bzw. Fahrradrahmens 28 dessen Oberrohr 31, Steuerrohr 33 und Unterrohr 35, zusammen mit dem Tretlager 37 mit eingesetzter Tretkurbel 39. Das Unterrohr 35 ist hier über den größeren Bereich seiner Länge nach unten hin geöffnet und nimmt dort im Wesentlichen sämtliche Komponenten eines Hilfsmotors auf. Dieser Hilfsmotor ist im gezeigten Beispiel als Elektromotor bzw. Elektroantrieb 41 ausgestaltet. Dessen Aufbau ist in Fig. 8 genauer dargestellt; demnach umfasst der Elektroantrieb eine Energiespeichervorrichtung, die hier als Akkupack 43 ausgestaltet ist. Dieser Akkupack weist eine Vielzahl von in Längsrichtung hintereinander und nebeneinander gepackten Standard-Akkus 43a auf. Ferner umfasst der Elektroantrieb 41 eine Elektronikbaugruppe 45 und - am unteren, dem Tretlagergehäuse zugewandten Ende - eine Antriebsvorrichtung und eine Getriebeeinrichtung, die im gezeigten Ausführungsbeispiel als eine Motor-Getriebe-Einheit 47 ausgestaltet sind. Ferner umfasst das hier gezeigt Ausführungsbeispiel ein Ritzel 47a, das als Abtriebs- oder Antriebsritzel ausgestaltet sein kann. Weiter weist das gezeigte Ausführungsbeispiel auch ein Gehäuse 52 auf, das dazu ausgelegt ist, den Hilfsmotor zu umgeben und vor Staub, Spritzwasser, Dreck, aufgewirbelten Partikeln und/oder Schlägen zu schützen.

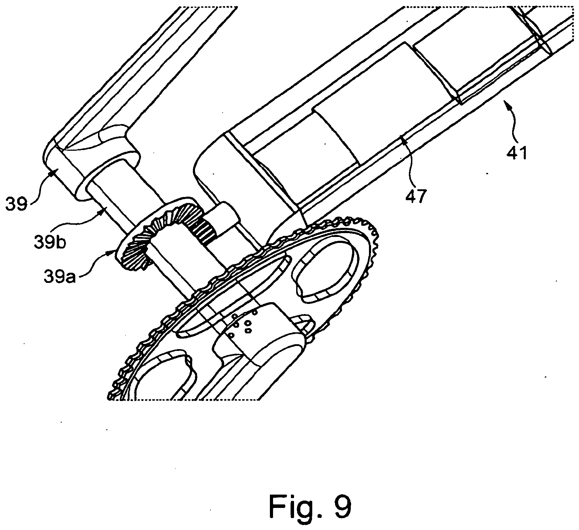

Fig. 9 zeigt die mechanische Verbindung zwischen dem Elektroantrieb 41 und der Tretkurbel 39 als Detailansicht genauer. Das Tretlagergehäuse ist in dieser Darstellung fortgelassen. Es ist zu erkennen, dass das Ritzel 47a der Motor-Getriebe-Einheit 47 in ein spezielles, stirnverzahntes Zahnrad 39a auf der Tretkurbelachse 39b eingreift. In einer Abwandlung dieser Konfiguration kann das tretkurbelseitige Zahnrad in vorteilhafter Weise auch nahe am Kettenrad platziert oder ggfs. mit diesem integriert ausgeführt sein, wodurch wesentliche konstruktive Eingriffe in das Tretlagergehäuse vermieden werden können. Bei dieser Abwandlung ist ein zusätzliches Übertragungselement zum Abtriebsritzel der Motor-Getriebe-Einheit vorzusehen.

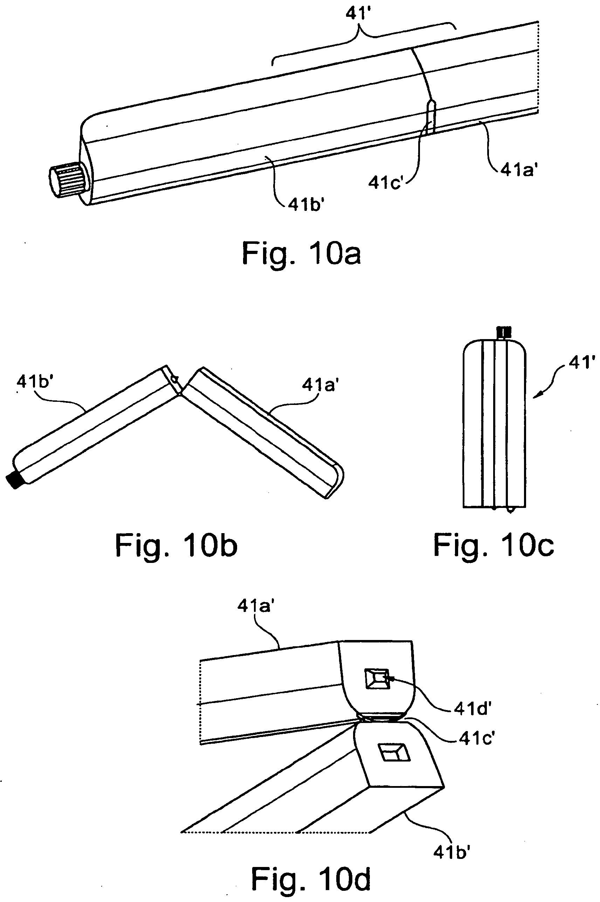

Fig. 10A bis 10D zeigen in Detailansichten einen in zwei Blöcke 41a', 41b' mit Scharnierverbindung 41c' untergliederten modifizierten Elektroantrieb 41'. Fig. 10B und 10C zeigen, wie die beiden Komponenten 41a', 41b' gegeneinander verklappt und zu einer gut transportierbaren kompakten Einheit zusammengelegt werden können, und Fig. 10D zeigt, wie beide Teile über eine Steckverbindung 41d' elektrisch miteinander verbunden sind.

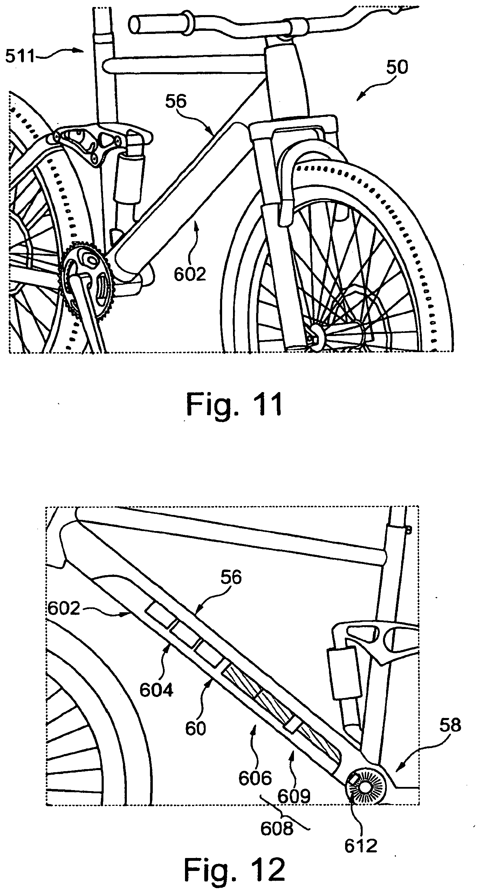

Fig. 11 zeigt weitere Aspekte einer Ausführungsform der Erfindung. Dargestellt ist ein Fahrrad 50, das vorzugsweise als Mountainbike ausgestaltet ist. Fahrrad 50 weist einen Rahmenabschnitt 54 auf, der unter anderem ein Unterrohr 56 umfasst. An dem Unterrohr 56 ist ein Hilfsmotor 60 angebracht. In der perspektivischen Ansicht der Fig. 11 kann man vom von einem potentiell angebrachten Hilfsmotor 60 lediglich ein Gehäuse 602 sehen, das dazu ausgelegt ist, die Komponenten eines Hilfsmotors 60 zu umgeben und vor äußeren Einflüssen (Feuchtigkeit, Hitze, Schläge, Spritzwasser etc.) zu schützen.

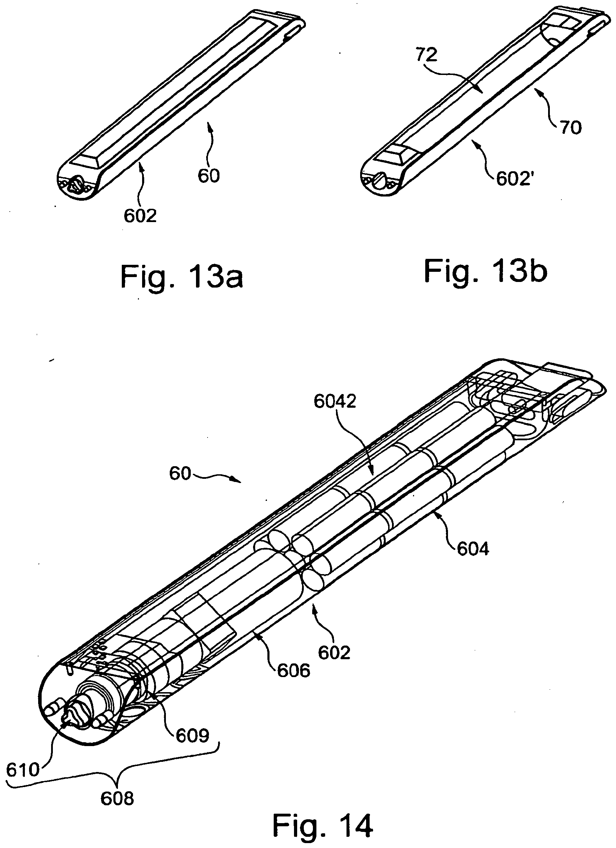

Alternativ zu Hilfsmotor 60 kann im Unterrohr 56 aber auch eine Blende bzw. ein Leergehäuse 70, wie in Fig. 13b gezeigt angeordnet bzw. befestigt werden. Blende 70 weist ein Gehäuse 602' auf, das zum Gehäuse 602 des Hilfsmotors 60 identisch oder ähnlich sein kann. Im Gegensatz zu Hilfsmotor 60 verfügt Blende 70 aber nicht über eine Energiespeichervorrichtung, eine Antriebsvorrichtung und eine Getriebeeinrichtung. Damit kann Blende 70 deutlich leichter sein als Hilfsmotor 70. Stattdessen weist Blende 70 vorzugsweise eine Aussparung 72 auf, die sich zumindest über einen Großteil der Längsrichtung und vorzugsweise auch über einen Großteil der Querrichtung der Blende erstreckt. Wenn an einem Unterrohr 56 eines Fahrrads 50, vorzugsweise an einer Unterseite des Unterrohrs 56 angeordnet, kann Aussparung 72 in Kombination mit einem Bereich des Unterrohr 56 einen Hohlraum bilden, der zum Transport von Werkzeugen und/oder Proviant genutzt werden kann bzw. dafür ausgestaltet ist, beispielsweise durch entsprechende Aufteilung.

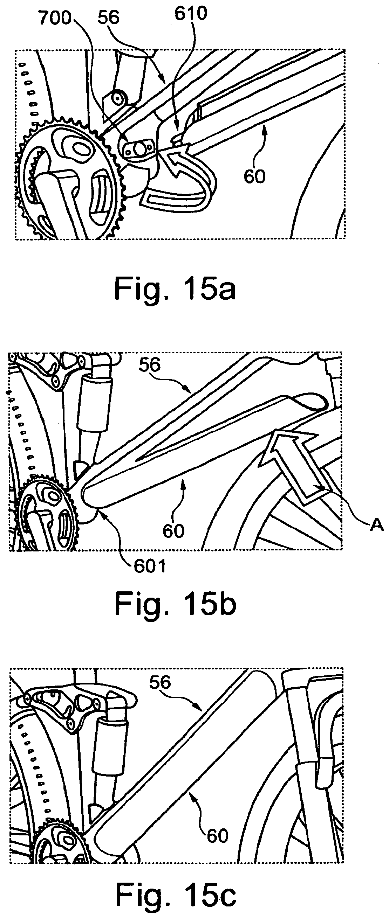

Das Fahrrad bzw. der Fahrradrahmen weist, wie vorstehend beschrieben, ein Unterrohr 56 auf, das ausgebildet ist, einen Hilfsmotor und/oder ein Gehäuse aufzunehmen bzw. daran zu befestigen. Dazu weist das Unterrohr vorzugsweise eine Abflachung, eine flache Seite, eine Vertiefung und/oder einen bspw. T-, L-, V- oder U-förmigen Querschnitt auf (nicht gezeigt bzw. s. bspw. a. Fig. 1 oder 15b). Vorzugsweise bildet das derart ausgestaltete Unterrohr mit am Rahmen bzw. am Unterrohr befestigtem Hilfsmotor oder Gehäuse eine optische Einheit.

Unabhängig ob Hilfsmotor 60, der gemäß Fig. 13a vorzugsweise kompakt ausgestaltet ist, oder Blende 70 am Unterrohr des Fahrrads 50 angeordnet sind, ist es besonders bevorzugt, dass die Kombination aus Unterrohr 56 und Hilfsmotor 60 bzw. Blende 70 einen glatten Übergang bilden, wie in Fig. 11 gezeigt. Ebenso ist es besonders bevorzugt, dass der Rahmen 54 auch ohne Hilfsmotor 60 und ohne Blende 70 alleine tragend ist. Dies kann zum Beispiel durch eine geeignete Materialwahl und eine geeignete Dimensionierung der Unterrohrs erreicht werden. In anderen Worten könnte Fahrrad 50 also auch ohne eines dieser beiden Elemente benutzt werden, auch wenn es bevorzugt ist - beispielsweise aus praktischen und ästhetischen Gesichtspunkten -, dass immer Blende 70 oder Hilfsmotor 60 am Unterrohr 56 angeordnet sind, wenn das Fahrrad 50 benutz wird. Der glatte Übergang zwischen Unterrohr 56 und Blende 70 bzw. Hilfsmotor 60 soll einerseits ästhetisch ansprechend sein. In anderen Worten kann dieser Übergang so ausgestaltet sein, dass die Gesamtstruktur einem gewöhnlichen Fahrrad-Unterrohr ähnelt oder gleicht.

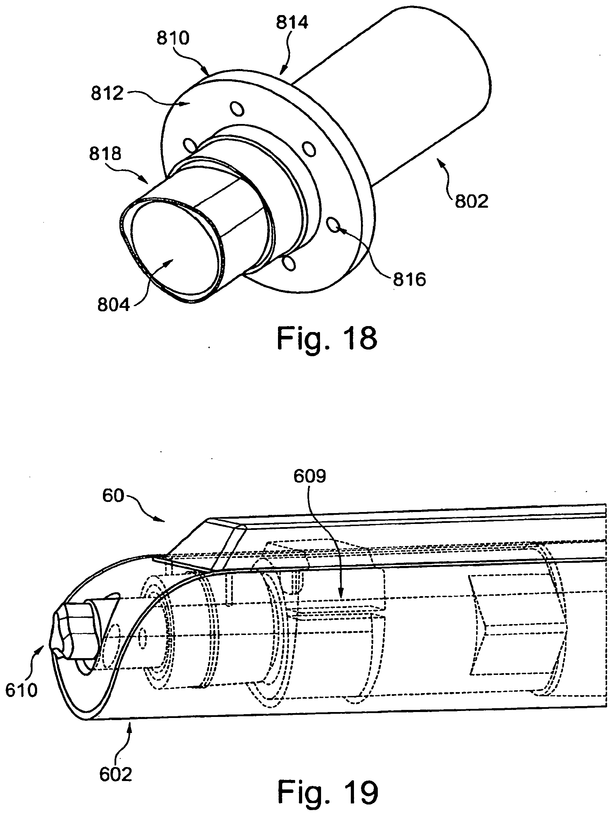

Fig. 12 zeigt eine teilweise Durchsicht auf einen Hilfsmotor 60, der an einem Unterrohr 56 eines Fahrrads angebracht ist. Wie zu sehen ist, beträgt die Gesamtlänge des Hilfsmotors weniger als etwa 90% der Länge des Unterrohrs. Neben dem vorbeschriebenen Gehäuse 602, das vorzugsweise einen glatten Übergang mit dem Unterrohr 56 bildet, umfasst Hilfsmotor 60 eine Energiespeichervorrichtung, die im gezeigten Ausführungsbeispiel ein Batterie- bzw. Akkupack 604 ist, eine Antriebsvorrichtung 606 und eine Getriebevorrichtung 608. Gemäß Fig. 14, die eine teilweise Durchsicht eines Hilfsmotors zeigt, weist das Batterie- bzw. Akkupack 608 eine Vielzahl von hinter- und/oder nebeneinander angeordneten Batterien bzw. Akkus 6042 auf, wobei die Längsachsen der Akkus bzw. Batterien 6042 besonders bevorzugt zu der Längsachse des Hilfsmotors im Wesentlichen parallel sind. Im Folgenden werden die Begriffe Akkus und Batterien austauschbar verwendet. Wann immer von einer Batterie die Rede ist, ist es dem Fachmann klar, dass er ebenso einen Akku an deren statt verwendet könnte (und umgekehrt), soweit nicht explizit auf etwas Anderes verwiesen wird oder sich aus dem funktionalen Zusammenhang ein Anderes ergibt. Die Antriebsvorrichtung 606, die im hier ausgeführten Beispiel ein Elektroantrieb sein kann, ist ausgelegt, die in den Akkus 6042 gespeicherte Energie in Bewegungsenergie umzuwandeln. Insbesondere erzeugt die Antriebsvorrichtung 606 aus der in den Akkus gespeicherten Energie eine Rotationsbewegung. Diese kann über eine Getriebeeinrichtung 608 auf eine Tretkurbelachse eines Fahrrads übertragen werden. Die Getriebeeinrichtung umfasst gemäß Fig. 12 und 14 einen Getriebeabschnitt 609, der innerhalb des Gehäuses 602 angeordnet ist (siehe hierzu auch Fig. 19). Dieser Getriebeabschnitt 609 ist ausgelegt, die von der Antriebsvorrichtung 606 erzeugt Rotation auf einen Getriebeadapter 610 zu übertragen. Getriebeadapter 610 ragt in Längsrichtung leicht, d.h. wenige Millimeter, zum Beispiel mindestens 3 mm, 5 mm oder 7 mm bis einige Zentimeter, z.B. maximal 1 cm, 1,5 cm oder 2,5 cm, über Gehäuse 602 hervor. Der Adapter weist eine unrunde Querschnittsform auf - er kann zum Beispiel abgerundet polygonal oder abgerundet sternförmig mit entsprechenden Fortsätzen sein. Auch andere unrunde Formen sind möglich.

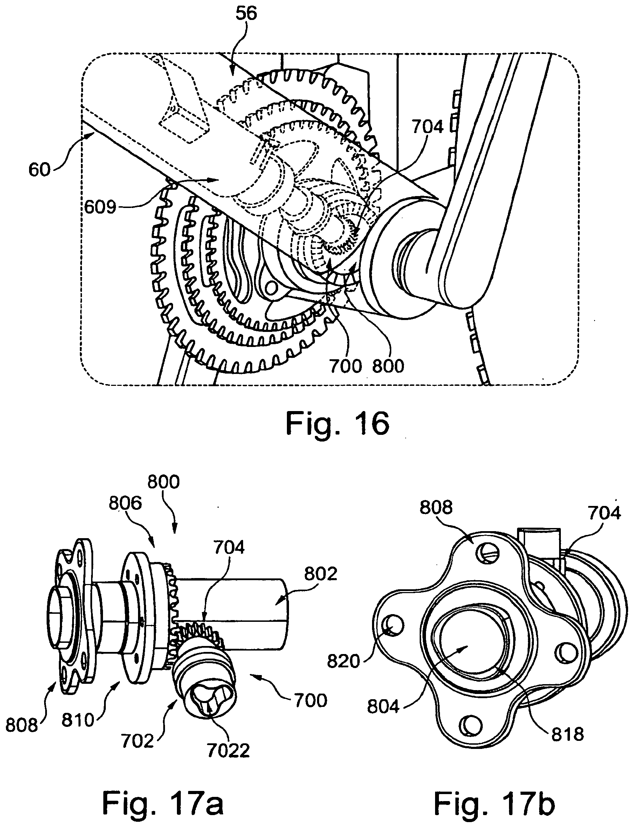

Antriebsadapter 610 ist ausgelegt, mit einer Rotationsübertragungseinheit 700, die in Fig. 17a dargestellt ist, in Eingriff zu sein. Rotationsübertragungseinheit 700 ist in einem entsprechenden Durchbruch zwischen Unterrohr 56 und einem Tretlagergehäuse 58 des Fahrrads 50 angeordnet. Die Rotationsübertragungseinheit 700 weist einen Aufnahmebereich 702 zur Aufnahme des Getriebeadapters 610 und ein Zahnrad 704 zur Übertragung eines Drehmoments auf ein anderes Zahnrad oder eine Welle auf. Aufnahmebereich 702 weist eine Aussparung 7022 zur formschlüssigen Aufnahme des Antriebsadapters 610 auf. Freilich ist es ebenso denkbar, dass der Antriebsadapter 610 eine Aussparung aufweist und Rotationsübertragungseinheit einen hervorstehenden Bereich aufweist, solange diese formschlüssig miteinander in Verbindung in Eingriff gebracht werden können.

Eine derartige Ausgestaltung kann nun vorteilhafter Weise eine besonders einfache Montage bzw. Anbringung eines Hilfsmotors 60 an ein Unterrohr 56 ermöglichen, wie zum Beispiel in der Figurenfolge 15a bis 15c dargestellt. In einem ersten Schritt kann das Längsende des Hilfsmotors 60, an welchem der Getriebeadapter 610 angeordnet ist, an einem Unterrohr 56 eines Fahrrads angeordnet werden. Hierbei kann Getriebeadapter 610 des Hilfsmotors 60 mit der Rotationsübertragungseinheit 700, die in einem Durchbruch zwischen Unterrohr 56 und Tretlagergehäuse 58 angeordnet, in Eingriff gebracht werden. In einem weiteren Schritt werden dann die übrigen Bereiche des Hilfsmotors 60 mit dem Unterrohr 56 in Verbindung gebracht, wobei dies bevorzugt, wie durch Pfeil A in Fig. 15b angedeutet, in einer Drehbewegung um den zuerst angebrachten Endbereich 601 des Hilfsmotors 60 geschieht. Vorzugsweise sind am Rahmen, vorzugsweise drei, Vertiefungen vorgesehen, in die am Unterrohr vorgesehene entsprechende Vorsprünge oder Schnapp-Stifte einrasten. Dies erfolgt vorzugsweise hörbar, bspw. durch ein "click"-Geräusch, das ein sicheres Einrasten signalisiert.

Hierdurch kann eine besonders einfache Montage, auch durch den Endbenutzer, gewährleistet sein. In ähnlicher Art und Weise kann freilich auch eine Blende 70 am Unterrohr angebracht werden und in umgekehrter Reihenfolge kann eine Blende 70 bzw. ein Hilfsmotor 60 vom Fahrrad 50 demontiert werden. Dies ermöglicht eine einfache und benutzerfreundliche Montage und Demontage des Hilfsmotors 60 und der Blende 70. Hierdurch kann der Benutzer selbst und kurzfristig entscheiden, ob er das Fahrrad 50 mit oder ohne Hilfsmotor 60 nutzen will.

Fig. 16 zeigt eine teilweise Durchsicht einer Anordnung, in der Hilfsmotor 60 an einem Unterrohr 56 eines Fahrrads montiert ist und über Rotationsübertragungseinheit 700 mit einem erfindungsgemäßen Antriebsadapter 800 in Wirkverbindung steht. Antriebsadapter 800 ist detaillierter in Fig. 17 a und b gezeigt. Weitere Details sind in Fig. 18 zu sehen. Der Antriebsadapter weist eine Hohlachse 802 auf, die ausgelegt ist, einen Teilbereich einer Tretkurbelachse koaxial zu umgeben bzw. auf diesen aufgesetzt zu werden. In anderen Worten kann ein innerer Hohlraum 804 der Hohlachse 802 also eine Tretkurbelachse eines Fahrrads aufnehmen. Weiter weist Antriebsadapter 800 ein Zahnrad 806 auf, das ausgelegt ist, mit Zahnrad bzw. Ritzel 704 der Rotationsübertragungseinheit 700 ein Wirkeingriff zu sein. Ferner weist der Antriebsadapter 800 einen Flansch 808 auf, der an einer Tretkurbel und vorzugsweise an einem Zahnkranz eines Fahrrads befestigt werden kann.

Zahnrad 806 ist vorzugsweise als Tellerrad ausgebildet. Besonders bevorzugt weist der Antriebsadapter 800 einen Kragenbereich 810 auf, der fest mit der Hohlachse bzw. -welle 802 verbunden ist bzw. integral mit ihr geformt ist. Der Kragenbereich 810 hat vorzugsweise einen deutlich größeren Durchmesser als Hohlwelle 802, beispielsweise beträgt sein Durchmesser mindestens ca. 120%, 150% oder 200% vom Durchmesser der Hohlachse. Damit weist der Kragenbereich 810 zwei zur Drehachse der Hohlachse 810 im Wesentlichen senkrechte Oberflächen 812, 814 auf. Bevorzugt ist der Kragenbereich 810 relativ dünn, zum Beispiel beträgt seine Dicke bzw. Tiefe weniger als 10 mm, bevorzugt weniger als 7 und besonders bevorzugt weniger als 5 mm. Besonders bevorzugt ist Zahnrad 806 an einer dieser Oberflächen 812, 814 befestigt. Dies kann zum Beispiel durch Anbringen verschiedener Schrauben, insbesondere Gewindeschrauben, durch Öffnungen 816 erfolgen. Hierdurch wird eine sehr gute und sichere Anbringung des Zahnrades 806 am der Hohlachse 802 gewährleistet.

Weiter ist es besonders bevorzugt, dass die Hohlachse 802 an mindestens einem Endbereich 818 in Längsrichtung eine unrunde Querschnittsform aufweist. Im gezeigten Ausführungsbeispiel ist das Außenprofil des Querschnitts der Endbereichs 818 im Wesentlichen eine abgerundete Dreiecksform, die bevorzugt in die Hohlachse 802 gefräst wird. Flansch 808 weist einen zu der unrunden Querschnittsform des Endbereichs 818 entsprechenden Durchbruch auf. Hierdurch können Antriebsadapter 800 und Flansch 808 formschlüssig miteinander verbunden werden.

Der Flansch 808 ist ausgelegt, an einer Tretkurbel, vorzugsweise an einem Zahnkranz eines Fahrrads befestigt zu werden. Hierzu kann der Flansch 808 zum Beispiel Löcher 820 zur Aufnahme von Schrauben aufweisen, mit denen der Flansch 808 an einen Zanhkranz befestigt werden kann.

Im Betrieb wird von der Speichervorrichtung 604 gespeicherte Energie (zum Beispiel von Akkus gespeicherte elektrische Energie) von der Antriebseinrichtung 606 in Bewegungsenergie, insbesondere in eine Rotationsbewegung umgewandelt. Diese wird dann über die Getriebeeinrichtung 608, insbesondere über Getriebeabschnitt 609, Antriebsadapter 610 und Rotationsübertragungseinheit 700 auf Zahnrad 806 des Antriebsadapters 800 übertragen. Dieser überträgt die Rotation auf Flansch 808 und weiter auf einen Zahnkranz des Fahrrads, der über eine Kette ein Zahnrad an einem Hinterrad eines Fahrrads antreibt.

In einer besonders bevorzugten Ausführungsform ist auch eine Energieübertragung in die andere Richtung möglich. In einem solchen Ausführungsbeispiel kann ein Fahrrad, zum Beispiel wie in Fig. 6 gezeigt "aufgebockt" sein. Insbesondere sind die Räder also nicht direkt mit dem Boden in Kontakt. Dann kann ein Benutzer, der mittels der Pedale eine Rotationsbewegung eine Rotation des Zahnkranzes bewirken, ohne, dass das Fahrrad hierdurch fortbewegt wird. Diese Rotation kann über den am Zahnkranz angebrachten Flansch 808 auf die Hohlachse 802 und damit auf den Antriebsadapter 800 übertragen werden. Dieser kann die Rotation über Zahnrad 806 und Rotationsübertragungseinheit 700 auf Getriebeeinrichtung 608 und Antriebsvorrichtung 606 übertragen. Diese ist in diesem besonders bevorzugten Ausführungsbeispiel dazu ausgelegt, die mechanische Rotationsenergie in von der Speichervorrichtung speicherbare Energie umzuwandeln. Zum Beispiel kann die Antriebsvorrichtung 606 die Rotationsenergie dazu nutzen, Ladungen zu trennen und damit Akkus aufzuladen. Diese speicherbare Energie wird dann von der Energiespeichervorrichtung gespeichert. Dieses Ausführungsbeispiel ermöglicht es dem Benutzer, durch seine eigene mechanische Tätigkeit die Energiespeichervorrichtungen aufzuladen.

Für den Fachmann ersichtlich können die einzelnen im Zusammenhang mit den unterschiedlichen bevorzugten beispielhafte Ausführungsformen beschriebenen Merkmale auch in anderen Ausführungsformen vorgesehen werden oder aber mit diesen kombiniert werden.

Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." bedeutet überdies "und/oder".

Die Ausführung der Erfindung ist nicht auf die in den Figuren gezeigten und oben erläuterten Beispiele unter hervorgehobenen Aspekte beschränkt, sondern ebenso in einer Vielzahl von Abwandlungen möglich, die im Rahmen fachgemäßen Handelns liegen.

## Patentansprüche

1. Fahrrad (50) mit einem Hilfsmotor (60), wobei der Hilfsmotor (60) e
ine Energiespeichervorrichtung (604) zur Speicherung von Energie,
eine Antriebsvorrichtung (606) zur Umwandlung von in der Energiespeichervorrichtung (604) gespeicherten Energie in Bewegungsenergie, und
eine Getriebeeinrichtung (608) aufweist,
wobei der Hilfsmotor (60) an einem Unterrohr (56) des Fahrrads (50) und zumindest im Wesentlichen parallel zu dem Unterrohr (56) angebracht ist,
wobei das Unterrohr (56) einen vertieften Bereich aufweist und zur Aufnahme des Hilfsmotors (60) ausgebildet ist,
wobei der Hilfsmotor (60) weiter ein Gehäuse (602) aufweist,
**dadurch gekennzeichnet, dass** das Gehäuse (602)
zumindest die Energiespeichervorrichtung (604) und die Antriebsvorrichtung (606) in einer Umfangsrichtung teilweise umgibt und
sich in einer Längsrichtung zumindest im Wesentlichen vollständig über die Energiespeichervorrichtung (604) und die Antriebsvorrichtung (606) erstreckt.

2. Fahrrad (50) nach Anspruch 1, wobei sich aus der Kombination aus Hilfsmotor (60) und Unterrohr (56) eine Unterrohrstruktur ergibt, die in einer beliebigen zur Längsachse des Unterrohrs (56) senkrechten Schnittebene eine Breite von 9 cm, 7 cm, 5 cm nicht überschreitet.

3. Fahrrad (50) nach einem der Ansprüche 1 bis 2, wobei das Unterrohr (56) auch ohne weitere Elemente, insbesondere ohne einen Hilfsmotor (60) tragend ist.

4. Fahrrad (50) nach einem der vorhergehenden Ansprüche, wobei die Energiespeichervorrichtung (604) und die Antriebsvorrichtung (606) in Längsrichtung hintereinander positionierbar sind und sich zumindest die Energiespeichervorrichtung (604) und die Antriebsvorrichtung (606) zusammengenommen in Längsrichtung nicht über die Länge des Unterrohrs (56) hinaus erstrecken.

5. Fahrrad (50) nach einem der vorhergehenden Ansprüche, wobei der Hilfsmotor (60) und insbesondere das Gehäuse (602) ausgelegt ist, einen glatten Übergang mit dem Unterrohr (56) zu bilden, insbesondere sodass die Kombination aus Hilfsmotor (60) und Unterrohr (56) dem Unterrohr eines gewöhnlichen Fahrrads ähnelt oder gleicht.

## Claims

1. A bicycle (50) having an auxiliary motor (60), wherein the auxiliary motor (60) comprises:
energy storing means (604) for storing energy,
drive means (606) for converting energy stored in the energy storing means (604) into kinetic energy, and
a gear device (608),
wherein the auxiliary motor (60) is mounted to a lower tube (56) of the bicycle (50) and at least substantially parallel to said lower tube (56),
wherein the lower tube (56) comprises a recessed region and is configured for receiving the auxiliary motor (60),
wherein the auxiliary motor (60) further comprises a housing (602),
**characterized in that** the housing (602)
embraces partially at least the energy storing means (604) and the drive means (606) in a circumferential direction and
extends at least substantially entirely over the energy storing means (604) and the drive means (606) in a longitudinal direction.

2. The bicycle (50) according to claim 1, wherein the combination of auxiliary motor (60) and lower tube (56) results in a lower tube structure which does not exceed a width of 9 cm, 7 cm, 5 cm in an arbitrary cross-sectional plane being perpendicular to the longitudinal axis of the lower tube (56).

3. The bicycle (50) according to any one of claims 1 to 2, wherein the lower tube (56) is a bearing member even without further elements, particularly without an auxiliary motor (60).

4. The bicycle (50) according to any one of the preceding claims, wherein the energy storing means (604) and the drive means (606) can be positioned one after the other in a longitudinal direction and at least the energy storing means (604) and the drive means (606) together do not extend over the length of the lower tube (56) in a longitudinal direction.

5. The bicycle (50) according to any one of the preceding claims, wherein the auxiliary motor (60) and particularly the housing (602) are configured to form a smooth transition to the lower tube (56), particularly such that the combination of auxiliary motor (60) and lower tube (56) is similar or identical to the lower tube of a conventional bicycle.

## Revendications

1. Bicyclette (50) avec un moteur auxiliaire (60), où le moteur auxiliaire (60)
comporte un dispositif d'accumulation d'énergie (604) destiné à accumuler de l'énergie, un dispositif d'entraînement (606) pour la conversion en énergie cinétique de l'énergie accumulée dans le dispositif d'accumulation d'énergie (604), et
un dispositif de transmission (608),
où le moteur auxiliaire (60) est monté sur un tube inférieur (56) de la bicyclette (50) et est au moins sensiblement parallèle au tube inférieur (56),
où le tube inférieur (56) présente une partie évidée et est prévu pour recevoir le moteur auxiliaire (60),
où le moteur auxiliaire (60) comprend en outre un carter (602),
**caractérisée en ce que** le carter (602)
entoure en partie au moins le dispositif d'accumulation d'énergie (604) et le dispositif d'entraînement (606) dans une direction circonférentielle, et
s'étend dans une direction longitudinale au moins sensiblement en totalité sur le dispositif d'accumulation d'énergie (604) et le dispositif d'entraînement (606).

2. Bicyclette (50) selon la revendication 1, où une structure de tube inférieur résulte de la combinaison du moteur auxiliaire (60) et du tube inférieur (56), laquelle n'excède pas une largeur de 9 cm, 7 cm, 5 cm dans un plan de coupe quelconque perpendiculaire à l'axe longitudinal du tube inférieur (56).

3. Bicyclette (50) selon la revendication 1 ou la revendication 2, où le tube inférieur (56) est porteur même sans autres éléments, en particulier sans moteur auxiliaire (60).

4. Bicyclette (50) selon l'une des revendications précédentes, où le dispositif d'accumulation d'énergie (604) et le dispositif d'entraînement (606) sont positionnables l'un derrière l'autre dans la direction longitudinale et où au moins le dispositif d'accumulation d'énergie (604) et le dispositif d'entraînement (606) pris ensemble dans la direction longitudinale ne dépassent pas la longueur du tube inférieur (56).

5. Bicyclette (50) selon l'une des revendications précédentes, où le moteur auxiliaire (60) et en particulier le carter (602) sont conçus pour former une transition régulière avec le tube inférieur (56), en particulier de sorte que la combinaison du moteur auxiliaire (60) et du tube inférieur (56) soit identique ou similaire au tube inférieur d'une bicyclette usuelle.
